(19) Europäisches Patentamt
European Patent Office
Office européen des brevets

(11) **EP 2 874 034 B1**

(12) **EUROPÄISCHE PATENTSCHRIFT**

(45) Veröffentlichungstag und Bekanntmachung des Hinweises auf die Patenterteilung:
**09.10.2019 Patentblatt 2019/41**

(51) Int Cl.:
***G05B 19/401*** *(2006.01)*     ***G05B 19/404*** *(2006.01)*
***G01B 21/08*** *(2006.01)*

(21) Anmeldenummer: **14003882.9**

(22) Anmeldetag: **19.11.2014**

(54) **Verfahren zur Auswertung eines Herstellungs- oder Bearbeitungsprozesses, bei dem an einem Stahlband zumindest ein Bearbeitungsschritt durchgeführt wird**

Method for evaluating a manufacturing or machining method, in which a steel strip is put through at least one processing step

Procédé d'évaluation d'un processus de fabrication ou de traitement, durant lequel une bande d'acier est soumise à au moins une étape de traitement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.11.2013 DE 102013019284**
**11.03.2014 DE 102014003100**

(43) Veröffentlichungstag der Anmeldung:
**20.05.2015 Patentblatt 2015/21**

(73) Patentinhaber: **VDEh-Betriebsforschungsinstitut GmbH**
**40042 Düsseldorf (DE)**

(72) Erfinder: **Brandenburger, Jens**
**47839 Krefeld (DE)**

(74) Vertreter: **Tilmann, Max Wilhelm et al**
**König-Szynka-Tilmann-von Renesse**
**Patentanwälte Partnerschaft mbB**
**Mönchenwerther Straße 11**
**40545 Düsseldorf (DE)**

(56) Entgegenhaltungen:
**EP-A2- 1 189 121    WO-A2-01/64138**

## Beschreibung

Die Erfindung betrifft ein Verfahren zur Auswertung eines Produktionsprozesses, bei dem an mindestens einem Produkt zumindest ein Produktionsschritt durchgeführt wird. Die zu dieser Erfindung führenden Arbeiten haben Unterstützung durch den European Community's Research Fund for Coal and Steel (RFCS) unter der Gewährungsnummer RFSC-CT-2012-00040 erhalten.

Bei Verfahren zur Herstellung und/oder Bearbeitung von Stahlbändern ist es bekannt, Eigenschaften des Stahlbandes an verschiedenen Messorten an der Oberfläche des Stahlbandes zu messen. Beispielsweise wird beim Walzen von Stahlbändern die Planheit des unter einer Messvorrichtung durchlaufenden Stahlbandes an in Durchlaufrichtung nacheinander folgenden Messorten gemessen. Ebenso ist es beispielsweise bekannt, bei der Bearbeitung von Stahlbändern Oberflächenfehler durch eine Messvorrichtung zu ermitteln, unter der das Stahlband durchläuft.

Bei den aus der Praxis bekannten Verfahren ist es bekannt, die jeweilige durch die Messung ermittelte, von einer Eigenschaft des Stahlbandes an dem Messort an der Oberfläche des Stahlbandes zum Zeitpunkt der Messung abhängige Information einer Auswerteeinheit zuzuführen. Die Auswerteeinheit speichert die Information und eine Lageinformation, die die Lage des Messorts relativ zu einem Referenzpunkt an der Oberfläche des Stahlbandes, meist dem Anfang des Stahlbandes, definiert, in einer Datenbank ab.

WO 01/64138 A2 offenbart eine Vorrichtung und ein Verfahren zum Darstellen der Dicke eines Elements aus Bio-Material, bei der bzw. dem die Dicke des Elements in Bereiche gleicher Dicke unterteilt dargestellt wird.

In der Praxis hat es sich gezeigt, dass diese Art der Datenablage bei der Auswertung des Produktionsprozesses, insbesondere hinsichtlich wiederkehrender oder systematischer Fehler, zu aufwendigen Aufbereitungsschritten der Daten führt. Ebenso ist es nachteilig, dass die Daten nur mit aufwendigen Aufbereitungsschritten ansprechend visualisiert werden können.

Vor diesem Hintergrund lag der Erfindung die Aufgabe zugrunde, ein Verfahren zur Auswertung eines Produktionsprozesses, bei dem an mindestens einem Produkt zumindest ein Produktionsschritt durchgeführt wird, vorzuschlagen, dass eine einfachere Auswertung und/oder eine einfachere Visualisierung der Daten ermöglicht.

Diese Aufgabe wird durch das Verfahren gemäß dem Anspruch 1 gelöst. Vorteilhafte Ausführungsformen sind in den Unteransprüchen und der hiernach folgenden Beschreibung wiedergegeben.

Die Erfindung geht von dem Grundgedanken aus, die Orte der Oberfläche des Produkts, beziehungsweise des Bereichs der Oberfläche des Produkts, der untersucht werden soll, über ihre Zugehörigkeit zu Gitterzellen eines Gitters zu beschreiben, und die durch die Messung gewonnene Information jeweils der Gitterzelle des Gitters zuzuordnen, in die der Messort fällt. Dieser Grundgedanke wird bei der Erfindung mit dem weiteren Grundgedanken kombiniert, die Orte der Oberfläche des Produkts, beziehungsweise des Bereichs der Oberfläche des Produkts, der untersucht werden soll, über ihre Zugehörigkeit zu Gitterzellen zweier unterschiedlicher Gitter zu beschreiben, wobei die Oberflächenbereiche des Produkts, denen die Gitterzellen des ersten Gitters zugeordnet sind, größer sind als die Oberflächenbereiche des Produkts, denen die Gitterzellen des zweiten Gitters zugeordnet sind. Das zweite Gitter ist mithin feinmaschiger als das erste Gitter.

Durch die Zuordnung zu einer Gitterzelle eines Gitters kann die Lageinformation über die Lage des Messorts verallgemeinert werden. Wird beispielsweise ein Gitter mit Gitterzellen mit rechteckiger Form und einer Kantenlänge in Längsrichtung des Stahlbandes von einem Meter und einer Kantenlänge in Breitenrichtung des Stahlbandes gewählt, die der Breite des zu untersuchenden Stahlbandes entspricht, und wird die von der Messvorrichtung durch Messung ermittelte Information, beispielsweise die Information über das Vorhandensein eines Oberflächenfehlers, gekoppelt mit der Lageinformation über die Zugehörigkeit ihres Messorts zu einer Gitterzelle dieses Gitters in einer Datenbank abgelegt, so kann eine Auswertung des Bearbeitungsprozesses des Stahlbandes mit Ziel, herauszufinden, ob in bestimmten Oberflächenbereichen des Stahlbandes Oberflächenfehler aufgetreten sind, einfacher durchgeführt werden, in dem aus der Datenbank die zu den bestimmten Oberflächenbereichen zugehörigen Gitterzellen abgelegten Informationen abgerufen werden. Diese Auswertung lässt sich einfacher durchführen, als bei dem aus der Praxis bekannten Verfahren, bei dem die in der Datenbank abgelegte Lageinformation, die Lage des Messorts relativ zu einem Referenzpunkt an der Oberfläche des Stahlbandes, meist dem Anfang des Stahlbandes, definiert. Bei der Auswertung der so abgelegten Daten muss eine Datenbankabfrage definiert werden, die alle Informationen zusammenträgt, deren in der Datenbank abgelegte Lageinformation zwischen zwei, den bestimmten Oberflächenbereich definierenden Punkten (Anfangspunkt und Endpunkt) liegt. Eine solche Datenbankabfrage ist in der Regel aufwändiger, als das Auslesen aller zu einer Gitterzelle hinterlegten Informationen. Bei dem aus der Praxis bekannten Verfahren wird die Lageinformation, die die Lage des Messorts relativ zu einem Referenzpunkt an der Oberfläche des Stahlbandes, meist dem Anfang des Stahlbandes, definiert, in der Regel mit hoher Genauigkeit abgelegt, beispielsweise in einen Millimeter- oder Mikrometer-Maßstab (wie viel Millimeter ist der Messort vom Referenzpunkt entfernt?). Das führt dazu, dass sich selbst die Lageinformationen zweier nah beieinander liegender Messorte voneinander unterscheiden, während bei dem erfindungsgemäßen Verfahren die Möglichkeit besteht, dass zwei nah beieinander liegende Messorte die gleiche Lageinformation haben, weil sie der gleichen Gitterzelle zugeordnet werden. Je nach Definition der Querschnittsfläche der Gitterzellen bietet die Erfindung somit die Möglichkeit, die Lageinformation über die Lage des Messorts zu verallgemeinern, also die Zahl der Messorte, die der gleichen Lageinformation zugeordnet werden, zu erhöhen. Bereits dies erlaubt eine einfachere Auswertung.

Die erfindungsgemäße Kombination des Grundgedankens des Einsatzes eines Gitters zum Beschreiben der Lage der Messorte anhand der Gitterzellen mit dem weiteren Grundgedanken, die Orte der Oberfläche des Produkts, beziehungsweise des Bereichs des Produkts, der untersucht werden soll, über ihre Zugehörigkeit zu Gitterzellen zweier unterschiedlicher Gitter zu beschreiben, verhindert zugleich den Verlust von Informationen. Je nach Wahl der Form und Querschnittsfläche der Gitterzellen der Gitter erlaubt es die Erfindung mit einem ersten, grobmaschigen Gitter, überblicksartig die durch mehrere Messungen an unterschiedlichen Messorten gewonnen Informationen zu sichten, während der Einsatz eines zweiten, sehr engmaschigen Gitters die Möglichkeit bereitstellt, die jeweilige Information innerhalb der gewünschten Genauigkeit zu lokalisieren. Durch die Wahl der Querschnittsfläche der Gitterzellen des zweiten Gitters besteht somit die Möglichkeit, die bei dem aus der Praxis bekannten Verfahren vorhandene Möglichkeit, die Information in einem Millimeter- oder Mikrometer-Maßstab zu lokalisieren, beizubehalten. Dafür ist es bei der Erfindung nur notwendig, die Querschnittsfläche der Gitterzellen des zweiten, engmaschigeren Gitters, im Quadratmillimeter- oder Quadratmikrometer-Bereich zu wählen. Ebenso ist es denkbar, in einer bevorzugten Ausführungsform auch die Rohdaten zusätzlich in der Datenbank abzuspeichern.

Die gespeicherte Information und/oder eine von der Information abhängige Sekundärinformation bezogen auf den gleichen Oberflächenbereich für das erste Gitter kann geringer sein als für das zweite Gitter. Die Informationsdichte des ersten Gitters kann geringer sein als die Informationsdichte des zweiten Gitters. Bezogen auf die gleiche Fläche des Produkts ist die Auflösung des ersten Gitters geringer als die Auflösung des zweiten Gitters.

In einer bevorzugten Ausführungsform der Erfindung wird die durch die Messung ermittelte Information nicht nur einer Gitterzelle eines ersten Gitters und einer Gitterzelle eines zweiten Gitters zugeordnet und zusammen mit ihrer Zugehörigkeit zu den jeweiligen Gitterzellen des ersten und des zweiten Gitters abgelegt, sondern die durch die Messung ermittelte Information wird zudem den jeweiligen Gitterzellen weiterer Gittern zugeordnet und zusammen mit ihrer Zugehörigkeit zu den jeweiligen Gitterzellen der weiteren Gitter abgelegt. Vorzugsweise wird die Information den jeweiligen Gitterzellen von insgesamt fünf, insbesondere bevorzugt von insgesamt acht und ganz besonders bevorzugt von mindestens zehn Gittern zugeordnet und zusammen mit ihrer Zugehörigkeit zu den jeweiligen Gitterzellen der jeweiligen Gitter abgelegt. Der Einsatz einer Vielzahl von Gittern erlaubt es, bei der Auswertung des Produktionsprozesses von einer überblicksartigen Auswertung, bei der die in einem grobmaschigen Gitter abgelegten Informationen betrachtet werden, zu einer immer feineren Ortsauflösung der Informationen überzugehen. Dieser Übergang von einer überblicksartigen Auswertung zu einer immer feineren Ortsauflösung kann als eine Art Zoomeffekt verstanden werden. Die Zahl der verwendeten, immer feinmaschiger werdenden Gitter bestimmt die Stufen des Zoomeffekts. Je höher die Zahl der verwendeten Gitter, desto übergangsloser erfolgt der Zoomeffekt, wenn man von der Betrachtung des nächst grobmaschigeren Gitters zu der Betrachtung des nächst feinmaschigeren Gitters wechselt.

Bei dem erfindungsgemäßen Verfahren führt eine Messvorrichtung eine Messung durch, um eine Information zu ermitteln. Die Information hängt von einer Eigenschaft des Produkts an einem Messort an der Oberfläche des Produkts zum Zeitpunkt der Messung ab. Die Messvorrichtung führt die Messung insbesondere bevorzugt kontaktlos durch, also ohne das Produkt für die Messung zu kontaktieren. In einer bevorzugten Ausführungsform ist die durch die Messung ermittelte Information eine aus der Gruppe der nachfolgenden Informationen:

- Dicke des Produktes am Messort,
- Temperatur der Produktoberfläche am Messort,
- Vorhandensein von Oberflächenfehler einer bestimmten Klasse am Messort,
- Vorhandensein von Auflagen, beispielsweise Beschichtungsdicken (Zinn-, Zinkauflage), auf der Oberfläche am Messort,
- Schichtdicke von Ölfilmen,
- Planheit der Oberfläche des Produkts am Messort,
- Bandzug am Messort bei Bandprodukten,
- Biegung,
- Breite,
- Dicke,
- Drehzahl von mit dem Produkt in Kontakt stehenden Walzen,
- Dressiergrad,
- Druck,
- Durchfluss des Produkts durch eine Produktionsanlage,
- Ladungsdichte,
- Leitfähigkeit,
- Mittenverschiebung des Produkts relativ zu einer Solllage,
- Ölauflage,

- pH-Wert,
- Reduktionsgrad,
- Reinheitsgrad,
- das Vorhandensein von Streckbiegerichtern beim Bearbeiten von Bandprodukten,
- Schwenken der mit dem Produkt in Kontakt stehenden Walzen,
- das Vorhandensein von Steuerrollen,
- Stromdichte,
- Summenstrom,
- Zugfestigkeit,
- Streckgrenze,
- Temperatur,
- Walzkraft der mit dem Produkt in Kontakt stehenden Walzen,
- Oberflächenfehler,
- Innenfehler,
- Löcher,
- Kantenrisse.

Die Information kann ein-dimensional sein, also eine bestimmte ein-dimensionale Eigenschaft am Messort repräsentieren, wie beispielsweise die Temperatur am Messort. Die Information kann aber auch zwei-dimensional sein, wie beispielsweise ein Temperaturverlauf bei einem linienförmigen Messort.

In einer bevorzugten Ausführungsform ist die durch die Messung ermittelte Information eine Information über das Vorhandensein von Oberflächenfehlern. Gestaltabweichungen technischer Oberflächen werden laut DIN 4760 in sechs unterschiedliche Grade unterteilt. Die Gestaltsabweichung 1. Ordnung wird als Formabweichungen bezeichnet. Die Gestaltsabweichung 2. Ordnung wird als Welligkeit bezeichnet. Die Gestaltsabweichung 3. Ordnung wird als Rauheit in Form von Rillen bezeichnet. Die Gestaltsabweichung der 4. Ordnung wird als Rauheit in Form von Riefen, Schuppen, Kuppen bezeichnet. Die Gestaltsabweichung der 5. Ordnung wird als Rauheit der Gefügestruktur bezeichnet. Die Gestaltsabweichung der 6. Ordnung wird als Gitteraufbau des Werkstoffs bezeichnet. In einer bevorzugten Ausführungsform enthält die Information über das Vorhandensein von Oberflächenfehlern eine Aussage darüber, ob eine Gestaltungsabweichung einer oder mehrerer Ordnungen vorliegt und welcher Ordnungen die Gestaltsabweichungen sind. Für die Umsetzung der Erfindung ist es auch möglich, ein eigenes Klassensystem mit einer eigenen Klasseneinteilung für Fehlerklassen zu entwickeln. Die Messvorrichtung kann dann so betrieben werden, dass sie für jeden Oberflächenfehler die Position und eine zugewiesene Fehlerklasse aus dem selbst gewählten Klassensystem liefert.

Die Messvorrichtung ist insbesondere bevorzugt ein Oberflächenprüfsystem, z. B. ein optisches Oberflächeninspektionssystem (OIS) oder ein Innenfehlerprüfsystem, beispielsweise ein Ultraschallprüfkopf oder ein Dickenmesssystem.

Durch die Messvorrichtung kann auch eine Messung durchgeführt werden, die Eigenschaften des Produkts unterhalb der Oberfläche des Produkts ermittelt, beispielsweise das Vorhandensein von Lunkern in einem Stahl. Auch bei diesen Messungen wird ein Ort an der Oberfläche des Produkts als Messort bezeichnet, um die Visualisierung der Information zu ermöglichen. Besonders bevorzugt wird der Ort an der Oberfläche des Produkts als Messort bezeichnet, von dem aus eine senkrecht zur Oberfläche stehende Linie den Ort der Eigenschaft des Produkts, die durch die ermittelte Information ausgedrückt wird (beispielsweise das Vorhandensein eines innenliegenden Lunkers) schneidet.

Der Messort kann ein im Wesentlichen punktförmiger Bereich auf der Oberfläche des Produkts sein. Es ist aber auch möglich, dass der Messort ein Rechteck ist. Dann wird die Information allen Gitterzellen zugeordnet, die von dem Rechteck geschnitten werden. Die Form des Messortes kann ebenfalls Einfluss auf die Art der ermittelten Information haben. Wird ein im Wesentlichen punktförmiger Bereich auf der Oberfläche des Produkts als Messort verwendet, werden meist ein-dimensionale Informationen ermittelt. Wird ein rechteckförmiger oder linienförmiger Messort gewählt, können beispielsweise zwei-dimensionale Informationen, wie ein Temperaturverlauf gemessen werden. Häufig wird die Form des Messorts auch durch die Art der eingesetzten Messvorrichtung vorgegeben.

Die Durchführung der Messung kann kontinuierlich erfolgen. Es ist aber auch denkbar, nur an gezielt ausgewählten Oberflächenbereichen eine Messung durchzuführen.

Erfindungsgemäß wird aus dem Ergebnis der Messung die Information erzeugt. Dies kann in der Messvorrichtung oder in einer Auswerteeinheit erfolgen. Beispielsweise kann ein Temperaturmessgerät als Ergebnis einer Messung ein elektrisches Signal bereitstellen. Durch Vergleich des elektrischen Signals mit einer Kalibriertabelle kann die Information erzeugt werden, welche Temperatur in °C die Oberfläche des Produktes am Messort zum Zeitpunkt der Messung hatte. Insbesondere bevorzugt ist das Ergebnis der Messung ein Signal und die Information eine Abfolge alphanumerischer Zahlen (Ziffern und/oder Buchstaben), beziehungsweise deren Repräsentation in einer Computersprache. Es sind Ausführungsformen denkbar, in denen die Messvorrichtung dauerhaft Messungen durchführt, so lange sich ein Bereich der Oberfläche des Produkts im Messfeld der Messvorrichtung befindet, und aus diesen Messungen fortlaufend Informationen erzeugt werden. So ist es beispielsweise möglich, die Temperatur der Oberfläche des Produkts nahezu vollständig über die Oberfläche des Produkts zu erfassen. Ebenso sind Ausführungsformen denkbar, bei denen die Messvorrichtung dauerhaft Messungen durchführt, eine Information aber nur dann erzeugt wird, wenn die Messvorrichtung eine bestimmte Ausprägung der Eigenschaft der Oberfläche des Produkts ermittelt hat. Beispielsweise kann bei einer Ausführungsform eine Information nur dann erzeugt werden, wenn ein Oberflächeninspektionssystem einen Oberflächenfehler entdeckt, während keine Information erzeugt wird, wenn das Oberflächeninspektionssystem keinen Oberflächenfehler entdeckt.

Die Auswerteeinheit ordnet die Information einer Gitterzelle eines mit nur einer einzigen Gitterzelle ausgeführten ersten Gitters oder einer Gitterzelle eines aus mindestens zwei Gitterzellen bestehenden ersten Gitters zu, wobei jeweils eine Gitterzelle des ersten Gitters jeweils einem Oberflächenbereich des Produkts zugeordnet ist und die Auswerteeinheit die Information der Gitterzelle des ersten Gitters zuordnet, in deren ihr zugeordneten Oberflächenbereich der Messort liegt.

In einer bevorzugten Ausführungsform kann der Auswerteeinheit die Lage des Messorts auf der Oberfläche des Produkts relativ zu einem Referenzpunkt oder einer Referenzlinie übermittelt werden, beispielsweise durch die Messvorrichtung. Ebenso ist es in einer alternativen Ausführungsform möglich, dass die Auswerteeinheit die Lage des Messorts auf der Oberfläche des Produkts relativ zu einem Referenzpunkt oder einer Referenzlinie selbst ermittelt. In einer bevorzugten Ausführungsform wird das Verfahren an einem Bandprodukt durchgeführt, dass an der Messvorrichtung vorbeigeführt wird. In einer solchen Ausführungsform kann die Auswerteeinheit die Lage des Messorts auf der Oberfläche des Produkts beispielsweise aus einer Information über das Passieren eines Referenzpunktes, beispielsweise des vorderen Endes des Bandprodukts an der Messvorrichtung sowie der Bandgeschwindigkeit, beziehungsweise dem Bandgeschwindigkeitsverlauf ermitteln. Erfährt die Auswerteeinheit zu welchem Zeitpunkt ab Passieren der vorderen Kante des Stahlbandes diese Messung getätigt wurde, so kann die Auswerteeinheit über die Bandgeschwindigkeit, beziehungsweise den Bandgeschwindigkeitsverlauf ermitteln, an welchem Messort relativ zur vorderen Kante des Stahlbandes die Messung getätigt wurde. Ebenso sind Ausführungsformen denkbar, bei denen das Produkt statisch ist und die Messvorrichtung relativ zu dem Produkt bewegt wird, beispielsweise entlang einer Schiene. Ist die Lage des Produkts relativ zur Schiene bekannt und wird der Fortschritt der Bewegung der Messvorrichtung entlang der Schiene ermittelt, so kann die Auswerteeinheit aus der Information über den Fortschritt der Bewegung der Messvorrichtung entlang der Schiene zum Messzeitpunkt den Messort ermitteln.

In einer bevorzugten Ausführungsform ist das Produkt ein Bandprodukt. Bei einer solchen Ausführungsform kann der Referenzpunkt auf einer Kante des Bandprodukts liegen, beziehungsweise die Referenzlinie entlang einer Kante des Bandprodukts führen. Bei entlang ihrer Längsachse bewegten Bandprodukten ist der Referenzpunkt besonders bevorzugt auf der in Bewegungsrichtung vorderen Kante angeordnet, beziehungsweise führt die Referenzlinie entlang der in Bewegungsrichtung vorderen Kante. Bei bewegten Produkten ist der Referenzpunkt insbesondere bevorzugt der in Bewegungsrichtung vorderste Punkt des Produkts, beziehungsweise ist die Referenzlinie die durch den in Bewegungsrichtung vordersten Punkt des Produkts verlaufende Linie, die senkrecht zur Bewegungsrichtung steht.

Das Gitter weist vorzugsweise einen Referenzpunkt oder eine Referenzlinie auf. Beispielsweise kann der Referenzpunkt auf einer Begrenzungslinie einer Gitterzelle liegen oder die Referenzlinie eine Begrenzungslinie einer Gitterzelle sein. In einer bevorzugten Ausführungsform weist das Gitter eine endliche Zahl von Gitterzellen auf. In einer solchen Ausführungsform ist der Referenzpunkt besonders bevorzugt auf einer Begrenzungslinie einer Gitterzelle angeordnet, die nur die eine Gitterzelle begrenzt (also sich an die Gitterzelle keine weitere Gitterzelle anschließt). Ebenso bevorzugt führt die Referenzlinie entlang einer Begrenzungslinie einer Gitterzelle, die nur die eine Gitterzelle begrenzt (sich also an die Gitterzelle keine weitere Gitterzelle anschließt).

Aus der Kenntnis über die Lage des Messorts auf der Oberfläche des Produkts relativ zu einem Referenzpunkt oder einer Referenzlinie und der Kenntnis über die Anordnung der Gitterzellen des Gitters relativ zum Referenzpunkt oder der Referenzlinie des Gitters kann die Auswerteeinheit in dieser Ausführungsform die Information einer Gitterzelle eines aus mindestens zwei Gitterzellen bestehenden ersten Gitters zuordnen, wobei jeweils eine Gitterzelle des ersten Gitters durch seine Lage relativ zum Referenzpunkt, beziehungsweise zur Referenzlinie des Gitters jeweils einem Oberflächenbereich des Produkts durch seine entsprechende Lage relativ zum Referenzpunkt, beziehungsweise zur Referenzlinie des Produkts zugeordnet ist und die Auswerteeinheit die Information der Gitterzelle des ersten Gitters zuordnet, in deren ihr zugeordneten Oberflächenbereich der Messort liegt.

Die Auswerteeinheit speichert die Information und/oder eine von der Information abhängige Sekundärinformation und eine Lageinformation, die die Lage der Gitterzelle des ersten Gitters, dem die Information zugeordnet wurde, innerhalb des ersten Gitters wiedergibt, in einer Datenbank ab. Insbesondere werden die Information und/oder eine von der Information abhängige Sekundärinformation und eine Lageinformation in einem Datensatz abgespeichert.

In einer bevorzugten Ausführungsform werden von der Messvorrichtung Messungen an unterschiedlichen Messorten an der Oberfläche des Produkts durchgeführt, um jeweils eine Information zu ermitteln, wobei die jeweilige Information von einer Eigenschaft des Produkts an dem jeweiligen Messort an der Oberfläche des Produkts zum Zeitpunkt der Messung abhängt. Abhängig von der Lage der Messorte und der Wahl der Form und Querschnittsfläche der Gitterzellen kann bei einer solchen Ausführungsform mehr als ein Messort in einer Gitterzelle liegen, beziehungsweise können mehrere Informationen einer Gitterzelle zugeordnet werden. Als eine von jeder der Gitterzelle zugeordneten Information abhängige Sekundärinformation kann die Auswerteeinheit in dieser Ausführungsform bei nummerisch ausgedrückten Informationen den Mittelwert, das Maximum, das Minimum, eine Information über die Verteilung der nummerisch ausgedrückten Informationen oder die Summe der nummerisch ausgedrückten Informationen zusammen mit der Lageinformation in der Datenbank abspeichern. Ist die Information eine Information über das Vorhandensein eines Oberflächenfehlers einer bestimmten Gattung, so kann die Auswerteeinheit als Sekundärinformation eine Information über die Zahl der der Gitterzelle zugeordneten Informationen und damit eine Information über die Zahl der in dem der Gitterzelle entsprechenden Oberflächenbereich vorhandenen Oberflächenfehler einer bestimmten Gattung zusammen mit der Lageinformation in der Datenbank abspeichern. Durch das Abspeichern der Sekundärinformation weist das erfindungsgemäße Verfahren die Möglichkeit auf, Informationen in einer Gitterzelle zu aggregieren.

Erfindungsgemäß wird der vorstehend beschriebene Prozess der Zuordnung der Information zu einer Gitterzelle eines Gitters und der Abspeicherung der Information und/oder einer von der Information abhängigen Sekundärinformation und einer Lageinformation in einer Datenbank für ein zweites Gitter wiederholt, wobei die Anzahl der Gitterzellen des zweiten Gitters größer ist als die Anzahl der Gitterzellen des ersten Gitters und jeweils eine Gitterzelle des zweiten Gitters jeweils einem Oberflächenbereich des Produkts zugeordnet ist, der kleiner ist, als der Oberflächenbereich, dem eine Gitterzelle des ersten Gitters zugeordnet ist. Das Abspeichern der Informationen in Bezug zu Gitterzellen zu mindestens zweier Gitter ermöglicht bei der Auswertung des Produktionsprozesse einen raschen Wechsel zwischen einer überblicksartigen Auswertung und einer detaillierteren Auswertung.

In einer bevorzugten Ausführungsform wird der vorstehend beschriebene Prozess der Zuordnung der Information zu einer Gitterzelle eines Gitters und der Abspeicherung der Information und/oder einer von der Information abhängigen Sekundärinformation und einer Lageinformation in einer Datenbank für eine Vielzahl Gitter wiederholt, insbesondere bevorzugt für insgesamt fünf, insbesondere bevorzugt für insgesamt acht und ganz besonders bevorzugt für mindestens zehn Gitter mit jeweils zunehmender Anzahl von Gitterzellen und zunehmend kleinerer Querschnittsfläche der jeweiligen Gitterzelle des Gitters.

Es sind Ausführungsformen denkbar, bei denen die einzelnen Gitterzellen eines Gitters unregelmäßig geformt sind und unterschiedliche Querschnittsflächen aufweisen. Eine solche Ausführungsform wird insbesondere bei Produkten mit unregelmäßig geformter Oberfläche Einsatz finden. In einer bevorzugten Ausführungsform haben jedoch die Gitterzellen des ersten Gitters untereinander eine gleiche Form und eine erste Querschnittsfläche und die Gitterzellen des zweiten Gitters untereinander eine gleiche Form und eine zweite Querschnittsfläche, wobei die zweite Querschnittsfläche kleiner ist, als die erste Querschnittsfläche der Gitterzellen des ersten Gitters. Insbesondere bevorzugt haben die Gitterzellen eine rechteckige und besonders bevorzugt eine quadratische Form. In einer bevorzugten Ausführungsform ist das Gitter endlich und weist eine Umhüllende auf, die der Umhüllenden der auszuwertenden Oberfläche entspricht. Insbesondere bevorzugt weist das Gitter bei einem Bandprodukt eine rechteckige Umhüllende auf. Bei dieser Ausführungsform sind die Gitterzellen insbesondere bevorzugt rechteckförmig, wobei sich die längere Seite der Gitterzelle in Längsrichtung des Bandprodukts erstreckt. Insbesondere bevorzugt haben die Gitterzellen eines der bei der Auswertung eines Stahlbands einzusetzenden Gitters eine Kantenlänge von der Größenordnung von 1m.

In einer bevorzugten Ausführungsform kann die Auswerteeinheit das erste Gitter und/oder das zweite Gitter auf einem Bildschirm visualisieren und eine von der Information oder der Sekundärinformation abhängige optische Information in der visuellen Wiedergabe der jeweiligen Gitterzelle wiedergeben, der die Information zugeordnet wurde. Als visuelle Wiedergabe wird insbesondere die Wiedergabe einer Farbe oder eines Musters verstanden. Ist die Information oder die Sekundärinformation eine numerische Zahl, so kann die Intensität der Farbe oder die Wahl der Farbe im Spektrum zu der Höhe des Werts der Zahl korrelieren. Beispielsweise können besonders niedrige Werte grün, und besonders hohe Wert rot dargestellt werden. Ebenso können besonders niedrige Werte durch ein feingliedriges Muster und besonders hohe Werte durch ein massives Muster dargestellt werden. Die Darstellung eines oder beider der Gitter und eine optische Information, die von der Information oder der Sekundärinformation abhängt, erlaubt eine rasche Auswertung des Produktionsprozesses. Beispielsweise kann als Sekundärinformation die Häufigkeit von Oberflächenfehler einer bestimmten Gattung auf dem der Gitterzelle zugeordneten Oberflächenbereich des Produkts abgespeichert und durch eine optische Information, beispielsweise zunehmend intensiver rot mit steigender Anzahl der Oberflächenfehler in der Gitterzelle, dargestellt werden. Eine solche Darstellung erlaubt es, rasch festzustellen, in welchen Oberflächenbereichen die meisten Oberflächenfehler aufgetreten sind.

In einer bevorzugten Ausführungsform werden das Produkt und die Messvorrichtung relativ zueinander bewegt. In dieser Ausführungsform führt die Messvorrichtung eine erste Messung durch, um eine Information zu ermitteln, wobei die Information von einer Eigenschaft des Produkts an einem ersten Messort an der Oberfläche des Produkts zum Zeitpunkt der ersten Messung abhängt. In dieser Ausführungsform führt die Messvorrichtung eine zweite Messung durch, um eine weitere Information zu ermitteln, wobei die Information von einer Eigenschaft des Produkts an einem zweiten Messort an der Oberfläche des Produkts zum Zeitpunkt der zweiten Messung abhängt. Diese Ausführungsform erlaubt es, den Verlauf der der Information zugehörigen Eigenschaft des Produkts über die Oberfläche des Produkts auszuwerten.

In einer bevorzugten Ausführungsform wird das erfindungsgemäße Verfahren für mehrere Produkte durchgeführt, insbesondere bevorzugt für mehrere Produkte, an denen nacheinander der zumindest eine Produktionsschritt durchgeführt wird. Diese Ausführungsform ist Gegenstand des Unteranspruchs 5.

Bei einer bevorzugten Ausführungsform speichert die Auswerteeinheit die Lageinformation und eine von der Information abhängige Sekundärinformation ab, wobei die Sekundärinformation von allen Informationen abhängt, die dieser Gitterzelle des jeweiligen Gitters zugeordnet werden, sei es Informationen des ersten Produkts, sei es Informationen des zweiten Produkts. Dadurch können Informationen über mehrere Produkte hinweg in einer Gitterzelle aggregiert werden. Bei der Auswertung kann so leicht festgestellt werden, welche Eigenschaft die Produkte in dem der Gitterzelle zugeordneten Oberflächenbereich über eine Abfolge von Produkten hatten. Alternativ ist es denkbar, dass die Auswerteeinheit eine nur jeweils von Informationen des einen Produkts abhängige Sekundärinformation zu der jeweiligen Gitterzelle ablegt und dass in einem Aufbereitungsschritt vor der Visualisierung der Daten eine Filterung nach den Datensätzen erfolgt, die für die Auswertung interessant sind, und ggf. die herausgefilterten Daten aggregiert werden.

In einer bevorzugten Ausführungsform haben die Gitterzellen des ersten Gitters und des dritten Gitters die gleiche Form und gleiche Querschnittsfläche und die Gitterzellen des zweiten Gitters und des vierten Gitters die gleiche Form und gleiche Querschnittsfläche. Insbesondere bevorzugt ist die Querschnittsfläche der Gitterzellen des zweiten und vierten Gitters kleiner, als die erste Querschnittsfläche der Gitterzellen des ersten und dritten Gitters.

In einer bevorzugten Ausführungsform ist die Anzahl der Gitterzellen des zweiten Gitters gleich der Anzahl der Gitterzellen des vierten Gitters und/oder die Anzahl der Gitterflächen des ersten Gitters gleich der Anzahl der Gitterzellen des dritten Gitters. Diese Ausführungsform kann auch Anwendung finden, wenn die zu untersuchenden Oberflächen der Produkte unterschiedlich groß sind. Wird für jedes Produkt in der jeweiligen Stufe der zunehmenden Feingliedrigkeit der Gitter ein Gitter mit der gleichen Anzahl von Gitterzellen gewählt, so führt das zwar dazu, dass die Querschnittsfläche der jeweiligen Gitterzelle des jeweiligen Gitters für Produkte mit kleineren zu untersuchenden Oberflächen kleiner wird, als für Produkte mit größerer zu untersuchender Oberfläche. Dadurch entsteht eine Normierung, die bei der Auswertung hilfreich sein kann.

Die bei der bevorzugten Ausführungsform des Unteranspruchs 5 abgespeicherte Produktinformation kann eine Kennziffer sein, die das Produkt innerhalb der Produktionsanlage eindeutig identifiziert. Ergänzend oder alternativ kann die Produktinformation auch eine oder mehrere der Informationen aus der nachfolgenden Gruppe beinhalten: Produktionsdatum, Materialgruppe, Dimensionen, Auftragsdaten, Legierung, Verwendungszweck, Prozessparameter, Sollvorgaben oder auch der bisheriger Herstellungsverlauf.

In einer bevorzugten Ausführungsform werden bei dem Verfahren mittels mehrerer, unterschiedlicher Messvorrichtungen Messungen durchgeführt, um mehrere, unterschiedliche Informationen zu ermitteln, die von unterschiedlichen Eigenschaften des Produkts an dem einen Messort an der Oberfläche des Produkts zum jeweiligen Zeitpunkt der Messung abhängen. Beispielsweise können Dicke, Breite, Temperatur, Auflagendicken, Planheit oder technologische Kenngrößen wie Streckgrenze und Zugfestigkeit ermittelt werden. Die jeweils ermittelten Informationen können dem erfindungsgemäßen Verfahren folgend jeweils Gitterzellen von mindestens zwei Gittern zugeordnet und die Information, beziehungsweise eine von der jeweiligen Information abhängige Sekundärinformation und eine Lageinformation, die die Lage der jeweiligen Gitterzelle des jeweiligen Gitters, dem die Information zugeordnet wurde, innerhalb des jeweiligen Gitters wiedergibt, in der Datenbank abgespeichert werden. Es sind auch Ausführungsformen möglich, bei denen die den unterschiedlichen Messungen entstammenden, dem jeweils einen Messort zugehörigen Informationen in einem Datensatz abgelegt werden. So kann beispielsweise zu jeder Gitterzelle jedes Gitters ein Datensatz angelegt werden, an dem an bestimmten Positionen die jeweilige Information einer jeweiligen Messung steht. Beispielsweise kann eine Tabelle erzeugt werden, deren jeweils eine Spalte jeweils einer Gitterzelle eines Gitters zugeordnet ist und in deren Zeilen die den unterschiedlichen Messungen entstammenden, dem jeweils einen Messort zugehörigen Informationen untereinander aufgelistet werden. Das Ablegen der Informationen in Datensätze erlaubt eine Filterung, bei der die Datensätze (und damit die Gitterzellen) ermittelt werden, in denen eine bestimmte Information einen bestimmten durch die Filterung herauszubringenden Wert überschreitet. Die so herausgefilterten Datensätze können dann visualisiert werden oder beispielsweise mit dem jeweiligen Datensatz aggregiert werden, der dem Herausgefilterten bei einem anderen Produkt entspricht.

Mit dem erfindungsgemäßen Verfahren können die Daten durch die Verwendung der unterschiedlichen Gitter simultan in verschiedenen Auflösungsstufen in einer Datenbank abgelegt werden. Um eine Aggregation der Messdaten über mehrere Produkte zu ermöglichen, kann die Speicherung normiert erfolgen, d. h. relativ zu den relevanten Produktdimensionen (im ein-dimensionalen Fall nur Länge, bei zwei-dimensionalen Messwerten Länge und Breite).

Das folgende Ausführungsbeispiel bezieht sich auf den zwei-dimensionalen Fall. Bei ein-dimensionalen Daten muss lediglich eine Dimension weggelassen werden. In jeder Stufe $i$ wird für jedes Band eine konstante Anzahl von Intervallen $N_x^i$ in jeder Dimension aus $\{x, y\}$ verwendet. Für jede Auflösungsstufe gelte

7

$$N_x^{i+1} = r_x\, N_x^i,\; r_x,\; N_0 \in \mathbb{N}.$$

Beispielgitter für: $r_x = r_y = 2$, $\quad N_x^0 = 1, \quad N_y^0 = 2$:

| Stufe $i$ | $N_x^i \;\times\; N_y^i$ | | |
|---|---|---|---|
| 0 | 1 | x | 2 |
| 1 | 2 | x | 4 |
| 2 | 4 | x | 8 |
| 3 | 8 | x | 16 |
| 4 | 16 | x | 32 |
| 5 | 32 | x | 64 |
| 6 | 64 | x | 128 |
| 7 | 128 | x | 256 |
| 8 | 256 | x | 512 |

Für jedes Produkt können nun die Messwerte innerhalb jeder Gitterzelle entsprechend der erwünschten Analysefunktion (Mittelwert, Min., Max., Anzahl, etc.) aggregiert und in der Datenbank abgelegt werden. Jede Gitterzelle ($x$, $y$) innerhalb einer Auflösungsstufe kann über einen ein-dimensionalen Index mit Hilfe einer bijektiven Abbildung

$$\mu: \left[0, N_x^i\right]\; x\; \left[0, N_y^i\right]\; \rightarrow\; \left[0, N_x^i\, N_y^i\right]$$ eindeutig adressiert $\left(\text{Zell ID} = \mu\,(x, y)\; \in\; [0, N_x^i\, N_y^i]\right)$ werden.

Jeder Datensatz kann aus den Basiseinträgen

Stufe, Zell ID     für die eindeutige Zuordnung der Auflösung und der relativen Position
Messwert     über die Zelle aggregierter Messwert
Band ID     Identifikator des produzierten Bandes

bestehen.

Die bandweise Speicherung der Gitterzellen ermöglicht die Abfrage nach Produkteigenschaften und ermöglicht die Anwendung von Filterbedingungen. Um das finale Analyseergebnis eines Messwertes über alle Bänder mit bestimmten Produkteigenschaften zu berechnen, ist es bei dem erfindungsgemäßen Verfahren möglich, nur noch die entsprechende Aggregatfunktion über alle Bänder die der Filterbedingung genügen auszuführen. Mittels geeignet gewählter Datenbankindizes lässt sich diese Operation schnell bewerkstelligen.

Besitzen auch die Messwerte in einer bevorzugten Ausführungsform Attribute, nach denen in der Auswertung gefiltert werden soll, so werden sowohl die Aggregatsberechnungen als auch die Speicherung für jede Attributausprägung getrennt durchgeführt. Für jedes dieser zusätzlichen Attribute wird eine weitere Spalte in der Gittertabelle angelegt werden.

Sofern die Auflösung des Gitters höher als die Auflösung einer kontinuierlichen Messung ist, so werden nicht alle möglichen Gitterzellen mit Messwerten gefüllt. Es können Lücken in der Gitterbelegung entstehen, die in der Visualisierung den Eindruck einer kontinuierlichen Datenbasis stören. In der Visualisierung werden die leeren Gitterzellen dann beispielsweise als Streifenmuster sichtbar.

Solche Effekte treten insbesondere bei traversierenden Messungen auf, bei denen in Spuren über die komplette Bandbreite mit alternierenden Querpositionen gemessen wird. In der Visualisierung können die leeren Gitterzellen mit Hilfe einer einfachen Interpolation aufgefüllt werden. Problematisch wird für solche Daten jedoch die Aggregation von Messungen mehrerer Bänder, da unerwünschte Muster dann nicht mehr durch leere Zellen entstehen, sondern durch Zellen die nur die Daten einer Teilmenge aller betrachteten Bänder enthalten. Der Mittelwert dieser Zellen entspricht dann beispielsweise nicht mehr dem Mittelwert der Grundgesamtheit.

Unter Verwendung der durch das erfindungsgemäße Verfahren möglich gewordenen multiskalen Speicherung ist es bevorzugt möglich, dieses Problem deutlich schneller zu lösen als durch eine mögliche bandweise Interpolation auf Datenbankebene. Definiert man für die Auflösungsstufe s den Messwert eines Bandes $v_{Band}^s$ an der Gitterposition *x, y* als

$$v_{Band}^s(x,y) := v_{Band}^{s^*}(x^*, y^*), \text{ mit } s^* := \max_{\substack{0 \le i \le s \\ \exists v_{Band}^i\left(\left\lfloor \frac{x}{r_x^{(s-i)}}\right\rfloor, \left\lfloor \frac{y}{r_y^{(s-i)}}\right\rfloor\right)}} i, \; x^* = \left\lfloor \frac{x}{r_x^{(s-s^*)}}\right\rfloor, y^* = \left\lfloor \frac{y}{r_y^{(s-s^*)}}\right\rfloor,$$

so erhält man unter der Voraussetzung, dass $v_{Band}^0 \; \forall \, (x,y) \in [0, N_0^x] \times [0, N_0^y]$ existiert, für jedes Band und jede Gitterzelle einen aus der Zellumgebung approximierten Messwert. Unter Verwendung der Approximation $v_{Band}^s$ kann nun sichergestellt werden, dass für alle nichtleeren Gitterzellen die gleiche Grundmenge an Bändern berücksichtigt ist. Leere Zellen können aus Optimierungsgründen weiterhin nach erfolgter Aggregation auf Visualisierungsebene gefüllt werden.

Durch die durch das erfindungsgemäße Verfahren möglich gewordene multiskale Speicherung können zunächst die grob aufgelösten Daten angezeigt werden, während die feineren Strukturen entweder nachgeladen oder erst in höheren Zoomstufen präsentiert werden. Durch die prompte Präsentation von Ergebnissen, selbst in niedriger Auflösung, steigt die Benutzerakzeptanz.

Erst durch dieses Verfahren werden interaktive Datamining-Anwendungen denkbar, bei denen ein Experte etliche Visualisierungen zunächst analysieren kann, um sich zu den relevanten Zusammenhängen vorzuarbeiten.

Koppelt man das beschriebene Verfahren mit einer Materialverfolgung und speichert die Daten für jede Prozessstufe separat, so lassen sich Messdaten über die gesamte Produktionskette verknüpfen und visualisieren.

Das erfindungsgemäße Verfahren findet insbesondere zur Auswertung eines Produktionsprozesses eines Bandproduktes Anwendung, insbesondere bevorzugt an Bandprodukten aus Papier, Aluminium, Kunststofffolie oder Stahl. Der Produktionsschritt des Produktionsprozess kann insbesondere ein Produktionsschritt eines Herstellungsprozess des Bandprodukts aus einem nicht bandförmigen Zwischenprodukt sein. Der Produktionsschritt des Produktionsprozesses ist aber insbesondere bevorzugt Behandlungsschritt an einem bereits bandförmigen Produkt, wie beispielsweise das Auswalzen eines bestehenden Bandprodukts. Das erfindungsgemäße Verfahren kann aber auch zur Auswertung von Produktionsprozessen nicht bandförmiger Produkte Anwendung finden.

In einer bevorzugten Ausführungsform wird der Produktionsschritt nacheinander an einer Mehrzahl von Produkten durchgeführt und das erfindungsgemäße Verfahren für alle oder zumindest für einige der Produkte durchgeführt. Bei dieser Ausführungsform können die Produkte unterschiedlich große zu untersuchende Oberflächenbereiche haben. Das Verfahren bietet die Möglichkeit, diese Oberflächenbereiche normiert darzustellen (also die Oberflächenbereiche unabhängig von ihrer tatsächlichen Größe durch jeweils ein Gitter mit jeweils der gleichen Zahl von Gitterzellen darzustellen). Ebenso sind Ausführungsformen möglich, bei denen für jedes Produkt Gitterzellen mit der gleichen Form und gleichen Querschnittsfläche eingesetzt werden, die sich bei unterschiedlicher Größe der Oberflächenbereiche jedoch in der Anzahl der Gitterzellen pro Gitter unterscheiden.

In einer bevorzugten Ausführungsform ist das Produkt ein Stahlband und der Produktionsschritt einer aus der Gruppe der nachfolgenden Schritte: Warmwalzen, Beizen, Kaltwalzen, Glühen, Entfetten, Beschichten, Zerteilen.

Nachfolgend wird die Erfindung anhand einer lediglich Ausführungsbeispiele darstellenden Zeichnung näher erläutert. Darin zeigen:

Fig. 1     eine Abfolge von Bildern, bei der jedes Bild die Visualisierung eines jeweiligen Gitters und einer von der Information oder der Sekundärinformation abhängigen Farbe wiedergibt und jedes Bild ein Gitter mit unterschiedlicher Anzahl von Gitterzellen zeigt und

Fig. 2     ein Bild, das ein Gitter und eine einer jeweiligen Gitterzelle zugehörige Sekundärinformation zeigt, wobei die Sekundärinformation die Anzahl Oberflächenfehler an der Veredelungsanlage am Ende der Produktion eines Stahlbandes aggregiert über 17.135 Stahlbänder darstellt beinhaltet.

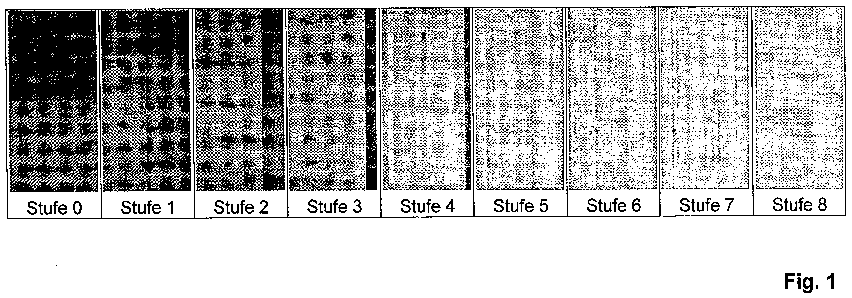

Die Fig. 1 zeigt das Ergebnis der Durchführung des erfindungsgemäßen Verfahrens bei der Behandlung eines Stahlbandes. Die insgesamt verwendeten neun Gitter wurden mit der oben genannten Kachelung $(r_x = r_y = 2, \; N_x^0 = 1, \; N_y^0 = 2)$ gewählt. Aggregiert wurden Ergebnisse eines Oberflächeninspektionssystems (OIS). Die Rohdaten bestanden aus Oberflächenfehlern und deren Attributen (Position, Ausdehnung, Fehlerklasse, Bandseite, OIS). Die Aggregation bestand aus der Anzahl von Defekten pro Gitterzelle. Die Fig. 1 zeigt die Visualisierung der Gitter 1 (Stufe 0) bis Gitter 9 (Stufe 8). Zu erkennen ist, dass bei dem Gitter 1 der Hinweis herausgelesen werden kann, dass das untersuchte Stahlband einen Oberflächenfehler einer bestimmten Fehlerklasse auf der betrachteten Seite des Bands hatte. Mit zunehmend feiner werdendem Gitter wird deutlich, an welcher Stelle die konkreten Fehler auftraten.

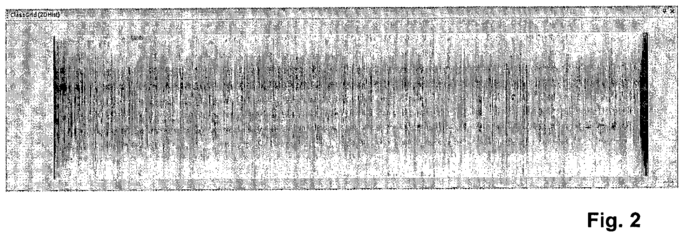

Die Fig. 2 zeigt die Visualisierung der Oberflächenfehler an der Veredelungsanlage am Ende der Produktion bei einer über 17.135 Stahlbänder aggregierten Auswertung. Die Bänder wiesen insgesamt 6.541 Detektionen auf. Das Gitter hatte 256x512 Gitterzellen.

**Patentansprüche**

1. Verfahren zur Auswertung eines Produktionsprozesses, bei dem an mindestens einem Produkt zumindest ein Produktionsschritt durchgeführt wird, wobei

   - eine Messvorrichtung eine Messung durchführt, um eine Information zu ermitteln, wobei die Information von einer Eigenschaft des Produkts an einem Messort an der Oberfläche des Produkts zum Zeitpunkt der Messung abhängt,
   - die Information aus dem Ergebnis der Messung erzeugt wird,
   - eine Auswerteeinheit die Information einer einzigen Gitterzelle eines mit nur einer einzigen Gitterzelle ausgeführten ersten Gitters oder einer Gitterzelle eines aus mindestens zwei Gitterzellen bestehenden ersten Gitters zuordnet, wobei jeweils eine Gitterzelle des ersten Gitters jeweils einem Oberflächenbereich des Produkts zugeordnet ist und die Auswerteeinheit die Information der Gitterzelle des ersten Gitters zuordnet, in deren Oberflächenbereich der Messort liegt,
   - die Auswerteeinheit die Information und/oder eine von der Information abhängige Sekundärinformation und eine Lageinformation, die die Lage der Gitterzelle des ersten Gitters, dem die Information zugeordnet wurde, innerhalb des ersten Gitters wiedergibt, in einer Datenbank abspeichert,
   **dadurch gekennzeichnet, dass**
   - die Auswerteeinheit die Information einer Gitterzelle eines aus einer Anzahl von Gitterzellen bestehenden zweiten Gitters zuordnet, wobei die Anzahl der Gitterzellen des zweiten Gitters größer ist als die Anzahl der Gitterzellen des ersten Gitters, und jeweils eine Gitterzelle des zweiten Gitters jeweils einem Oberflächenbereich des Produkts zugeordnet ist, der kleiner ist, als der Oberflächenbereich, dem eine Gitterzelle des ersten Gitters zugeordnet ist, und die Auswerteeinheit die Information der Gitterzelle des zweiten Gitters zuordnet, in deren Oberflächenbereich der Messort liegt,
   - die Auswerteeinheit die Information und/oder eine von der Information abhängige Sekundärinformation und eine Lageinformation, die die Lage der Gitterzelle des zweiten Gitters, dem die Information zugeordnet wurde, innerhalb des zweiten Gitters wiedergibt, in der Datenbank abspeichert.

2. Verfahren nach Anspruch 1, **dadurch gekennzeichnet, dass** die Gitterzellen des ersten Gitters untereinander eine gleiche Form und eine erste Querschnittsfläche haben und die Gitterzellen des zweiten Gitters untereinander eine gleiche Form und eine zweite Querschnittsfläche haben, wobei die zweite Querschnittsfläche kleiner ist, als die erste Querschnittsfläche der Gitterzellen des ersten Gitters.

3. Verfahren nach Anspruch 1 oder 2, **dadurch gekennzeichnet, dass** die Auswerteeinheit das erste Gitter und/oder das zweite Gitter auf einem Bildschirm visualisieren kann und eine von der Information oder der Sekundärinformation abhängige optische Information in der visuellen Wiedergabe der jeweiligen Gitterzelle wiedergeben kann, der die Information zugeordnet wurde.

4. Verfahren nach einem der Ansprüche 1 bis 3, **dadurch gekennzeichnet, dass** das Produkt und die Messvorrichtung relativ zueinander bewegt werden und die Messvorrichtung eine erste Messung durchführt, um eine Information zu ermitteln, wobei die Information von einer Eigenschaft des Produkts an einem ersten Messort an der Oberfläche des Produkts zum Zeitpunkt der ersten Messung abhängt, und die Messvorrichtung eine zweite Messung durchführt, um eine weitere Information zu ermitteln, wobei die Information von einer Eigenschaft des Produkts an einem zweiten Messort an der Oberfläche des Produkts zum Zeitpunkt der zweiten Messung abhängt.

5. Verfahren nach einem der Ansprüche 1 bis 4, **dadurch gekennzeichnet, dass** bei dem Produktionsprozess an mindestens einem ersten und einem zweiten Produkt der Produktionsschritt durchgeführt wird, bei dem

- eine Messvorrichtung eine Messung durchführt, um eine erste Information zu ermitteln, wobei die erste Information von einer Eigenschaft des ersten Produkts an einem Messort an der Oberfläche des ersten Produkts zum Zeitpunkt der Messung abhängt,
- die erste Information aus dem Ergebnis der Messung erzeugt wird,
- die Auswerteeinheit die erste Information einer Gitterzelle eines aus mindestens zwei Gitterzellen bestehenden ersten Gitters zuordnet, wobei jeweils eine Gitterzelle des ersten Gitters jeweils einem Oberflächenbereich des ersten Produkts zugeordnet ist und die Auswerteeinheit die erste Information der Gitterzelle des ersten Gitters zuordnet, in deren Oberflächenbereich der Messort liegt,
- die Auswerteeinheit die erste Information und/oder eine von der ersten Information abhängige Sekundärinformation und eine Lageinformation, die die Lage der Gitterzelle des ersten Gitters, dem die erste Information zugeordnet wurde, innerhalb des ersten Gitters wiedergibt, und eine Produktinformation, die das erste Produkt identifiziert, in einer Datenbank abspeichert,
- die Auswerteeinheit die erste Information einer Gitterzelle eines aus einer Anzahl von Gitterzellen bestehenden zweiten Gitters zuordnet, wobei die Anzahl der Gitterzellen des zweiten Gitters größer ist als die Anzahl der Gitterzellen des ersten Gitters und jeweils eine Gitterzelle des zweiten Gitters jeweils einem Oberflächenbereich des ersten Produkts zugeordnet ist, der kleiner ist, als der Oberflächenbereich, dem eine Gitterzelle des ersten Gitters zugeordnet ist, und die Auswerteeinheit die erste Information der Gitterzelle des zweiten Gitters zuordnet, in deren Oberflächenbereich der Messort liegt,
- die Auswerteeinheit die erste Information und/oder eine von der Information abhängige erste oder weitere Sekundärinformation und eine Lageinformation, die die Lage der Gitterzelle des zweiten Gitters, dem die erste Information zugeordnet wurde, innerhalb des zweiten Gitters wiedergibt, und eine Produktinformation, die das erste Produkt identifiziert, in der Datenbank abspeichert und
- eine Messvorrichtung eine Messung durchführt, um eine zweite Information zu ermitteln, wobei die zweite Information von einer Eigenschaft des zweiten Produkts an einem Messort an der Oberfläche des zweiten Produkts zum Zeitpunkt der Messung abhängt,
- die zweite Information aus dem Ergebnis der Messung erzeugt wird,
- die Auswerteeinheit die zweite Information einer Gitterzelle eines aus mindestens zwei Gitterzellen bestehenden dritten Gitters zuordnet, wobei jeweils eine Gitterzelle des dritten Gitters jeweils einem Oberflächenbereich des zweiten Produkts zugeordnet ist und die Auswerteeinheit die zweite Information der Gitterzelle des dritten Gitters zuordnet, in deren Oberflächenbereich der Messort liegt,
- die Auswerteeinheit die zweite Information und/oder eine von der zweiten Information abhängige zweite Sekundärinformation und eine Lageinformation, die die Lage der Gitterzelle des dritten Gitters, dem die zweite Information zugeordnet wurde, innerhalb des dritten Gitters wiedergibt, und eine Produktinformation, die das zweite Produkt identifiziert, in einer Datenbank abspeichert,
- die Auswerteeinheit die zweite Information einer Gitterzelle eines aus einer Anzahl von Gitterzellen bestehenden vierten Gitters zuordnet, wobei die Anzahl der Gitterzellen des vierten Gitters größer ist als die Anzahl der Gitterzellen des dritten Gitters und jeweils eine Gitterzelle des vierten Gitters jeweils einem Oberflächenbereich des zweiten Produkts zugeordnet ist, der kleiner ist, als der Oberflächenbereich, dem eine Gitterzelle des dritten Gitters zugeordnet ist, und die Auswerteeinheit die zweite Information der Gitterzelle des vierten Gitters zuordnet, in deren Oberflächenbereich der Messort liegt,
- die Auswerteeinheit die zweite Information und/oder eine von der zweiten Information abhängige zweite oder zweite weitere Sekundärinformation und eine Lageinformation, die die Lage der Gitterzelle des vierten Gitters, die zweite Information zugeordnet wurde, innerhalb des vierten Gitters wiedergibt, und eine Produktinformation, die das zweite Produkt identifiziert, in der Datenbank abspeichert.

6. Verfahren nach Anspruch 5, **dadurch gekennzeichnet, dass** die Gitterzellen des ersten Gitters und des dritten Gitter die gleiche Form und gleiche Querschnittsfläche haben und die Gitterzellen des zweiten Gitters und des vierten Gitters die gleiche Form und gleiche Querschnittsfläche haben.

7. Verfahren nach Anspruch 6, **dadurch gekennzeichnet, dass** die Querschnittsfläche der Gitterzellen des zweiten und vierten Gitters kleiner ist, als die erste Querschnittsfläche der Gitterzellen des ersten und dritten Gitters.

8. Verfahren nach Anspruch 6 oder 7, **dadurch gekennzeichnet, dass** die Anzahl der Gitterzellen des zweiten Gitters gleich der Anzahl der Gitterzellen des vierten Gitters und/oder die Anzahl der Gitterflächen des ersten Gitters gleich der Anzahl der Gitterzellen des dritten Gitters ist.

9. Verfahren nach einem der Ansprüche 1 bis 8, **dadurch gekennzeichnet, dass** bei einem Vergleich von Messungen an mehr als einem Produkt für alle Gitterzellen, denen eine Information zugeordnet ist, eine gleiche Grundmenge an bandförmigen Messungen berücksichtigt wird.

**Claims**

1.  Method for evaluating a production process, where at least one production step is carried out on not less than one product, wherein

    - a measuring device carries out a measurement to calculate information, wherein the information depends on a feature of the product at a measuring point on the surface of the product at the time of the measurement,
    - the information is generated from the result of the measurement,
    - an evaluation unit allocates the information to a single grid cell of a first grid designed with just a single grid cell or a grid cell of a first grid consisting of at least two grid cells, wherein one grid cell each of the first grid is each allocated to a surface area of the product, and the evaluation unit allocates the information to the grid cell of the first grid, on the surface area of which the measuring point lies,
    - the evaluation unit stores the information and/or secondary information depending on said information and position information, which reflects the position of the grid cell of the first grid to which the information was allocated, within the first grid in a databank,
    **characterised in that**
    - the evaluation unit allocates the information to one grid cell of a second grid consisting of a number of grid cells, wherein the number of grid cells of the second grid is greater than the number of grid cells of the first grid, and one grid cell each of the second grid is each allocated to a surface area of the product that is smaller than the surface area to which a grid cell of the first grid is allocated, and the evaluation unit allocates information to the grid cell of the second grid within the surface area of which the measuring point lies,
    - the evaluation unit stores the information and/or secondary information depending on said information and position information, which reflects the position of the grid cell of the second grid to which the information was allocated, within the second grid in a databank.

2.  Method according to claim 1, **characterised in that** the grid cells of the first grid have the same shape amongst each other and have a first cross-section area, and the grid cells of the second grid have the same shape amongst each other and a second cross-section area, wherein the second cross-section area is smaller than the first cross-section area of the grid cells of the first grid.

3.  Method according to claim 1 or 2, **characterised in that** the evaluation unit can visualise the first grid and/or the second grid on a monitor and reproduce optical information depending on the information or the secondary information in the visual representation of the respective grid cell to which the information was allocated.

4.  Method according to one of the claims 1 to 3, **characterised in that** the product and the measuring device are moved relative to each other and the measuring device carries out a first measurement to calculate information, wherein the information depends on a feature of the product at a first measuring point on the surface of the product at the time of the first measurement, and the measuring device carries out a second measurement to calculate further information, wherein the information depends on a feature of the product at a second measuring point on the surface of the product at the time of the second measurement.

5.  Method according to one of the claims 1 to 4, **characterised in that** the production step is carried out during the production process on at least one first and one second product, where

    - a measuring device carries out a measurement to calculate a first information, wherein the first information depends on a feature of the first product at a measuring point on the surface of the first product at the time of the measurement,
    - the first information is generated from the result of the measurement,
    - the evaluation unit allocates the first information to a grid cell to a first grid consisting of at least two grid cells, wherein one grid cell each of the first grid is allocated to one surface area each of the first product, and the evaluation unit allocates the first information to the grid cell of the first grid, on the surface area of which the measuring point lies,
    - the evaluation unit stores the first information and/or secondary information depending on the first information and position information that reflects the position of the grid cell of the first grid to which the first information was allocated inside the first grid and product information that identifies the first product, in a databank,

- the evaluation unit allocates the first information to a grid cell of a second grid consisting of a number of grid cells, wherein the number of grid cells of the second grid is greater than the number of grid cells of the first grid and one grid cell each of the second grid is allocated to one surface area each of the first product, which is smaller than the surface area to which a grid cell of the first grid is allocated, and the evaluation unit allocates the first information to the grid cell of the second grid, in the surface area of which the measuring point lies,

- the evaluation unit stores the first information and/or first or further secondary information depending on said information and position information, which reflects a position of the grid cell of the second grid to which the first information was allocated, within the second grid in a databank, and product information that identifies the first product,

and

- a measuring device carries out a measurement to calculate second information, wherein the second information depends on a feature of the second product at a measuring point on the surface of the second product at the time of the measurement,

- the second information is generated from the result of the measurement,

- the evaluation unit allocates the second information to a grid cell of a third grid consisting of at least two grid cells, wherein one grid cell each of the third grid is each allocated to a surface area of the second product, and the evaluation unit allocates the second information to the grid cell of the third grid, on the surface area of which the measuring point lies,

- the evaluation unit stores the second information and/or second secondary information depending on said second information and position information, which reflects the position of the grid cell of the third grid to which the second information was allocated, and product information that identities the second product, in a databank,

- the evaluation unit allocates the second information to a grid cell of a fourth grid consisting of a number of grid cells, wherein the number of grid cells of the fourth grid is greater than the number of grid cells of the third grid, and one grid cell each of the fourth grid is each allocated to a surface area of the second product that is smaller than the surface area to which a grid cell of the third grid is allocated, and the evaluation unit allocates the second information to the grid cell of the fourth grid within the surface area of which the measuring point lies,

- the evaluation unit stores the second information and/or second or second further secondary information depending on said second information and position information, which reflects the position of the grid cell of the fourth grid to which the information was allocated, within the fourth grid in a databank, and product information that identifies the second product, in the databank.

6. Method according to claim 5, **characterised in that** the grid cells of the first grid and the third grid have the same shape and the same cross-section area, and the grid cells of the second grid and the fourth grid have the same shape and the same cross-section area.

7. Method according to claim 6, **characterised in that** the cross-section area of the grid cells of the second and fourth grid is smaller than the first cross-section area of the grid cells of the first and third grid.

8. Method according to claim 6 or 7, **characterised in that** the number of grid cells of the second grid equals the number of grid cells of the fourth grid and/or the number of grid areas of the first grid equal the number of grid cells of the third grid.

9. Method according to one of the claims 1 to 8, **characterised in that** an identical basic quantity of ribbon-shaped measurements is taken into consideration during a comparison of measurements on more than one product for all grid cells to which information is allocated.

## Revendications

1. Procédé d'évaluation d'un processus de production, lors duquel au moins une étape de production est effectuée pour au moins un produit,

• un dispositif de mesure effectuant une mesure pour déterminer une information, l'information dépendant d'une propriété du produit à un point de mesure sur la surface du produit au moment de la mesure,

• l'information étant générée à partir du résultat de la mesure,

• une unité d'évaluation affectant l'information à une seule maille d'un premier réseau à une seule maille ou à une maille d'un premier réseau comprenant au moins deux mailles, une maille du premier réseau étant toujours affectée à une zone de surface du produit et l'unité d'évaluation affectant l'information à la maille du premier réseau dont la zone de surface comprend le point de mesure,
• l'unité d'évaluation enregistre dans une base de données l'information et / ou une information secondaire dépendante de l'information et une information sur la position qui reproduit au sein du premier réseau la position de la maille du premier réseau auquel l'information a été affectée,

**caractérisé en ce que**

• l'unité d'évaluation affecte l'information d'une maille d'un deuxième réseau comprenant un certain nombre de mailles, le nombre de mailles du deuxième réseau étant supérieur au nombre de mailles du premier réseau et une maille du deuxième réseau étant toujours affectée à une zone de surface du produit, qui est inférieure à la zone de surface à laquelle est affectée une maille du premier réseau, et l'unité d'évaluation affectant l'information à la maille du deuxième réseau dont la zone de surface comprend le point de mesure, l'unité d'évaluation enregistre dans la base de données l'information et / ou une information secondaire dépendante de l'information et une information sur la position qui reproduit au sein du deuxième réseau la position de la maille du deuxième réseau auquel l'information a été affectée.

2. Procédé selon la revendication 1, **caractérisé en ce que** les mailles du premier réseau ont toutes une même forme et une première surface de section transversale et que les mailles du deuxième réseau ont toutes une même forme et une deuxième surface de section transversale, la deuxième surface de section transversale étant inférieure à la première surface de section transversale des mailles du premier réseau.

3. Procédé selon la revendications 1 ou 2, **caractérisé en ce que** l'unité d'évaluation peut visualiser sur un écran le premier réseau et / ou le deuxième réseau et reproduire une information optique dépendante de l'information ou de l'information secondaire dans la reproduction visuelle de la maille de réseau à laquelle l'information a été affectée.

4. Procédé selon l'une quelconque des revendications 1 à 3, **caractérisé en ce que** le produit et le dispositif de mesure sont déplacés l'un par rapport à l'autre et que le dispositif de mesure effectue une première mesure pour déterminer une information, l'information dépendant d'une propriété du produit à un premier point de mesure sur la surface du produit au moment de la première mesure, et que le dispositif de mesure effectue une deuxième mesure pour déterminer une autre information, l'information dépendant d'une propriété du produit à un deuxième point de mesure sur la surface du produit au moment de la deuxième mesure.

5. Procédé selon l'une quelconque des revendications 1 à 4, **caractérisé en ce que**, pendant le processus de production, l'étape de production est effectuée sur au moins un premier et un deuxième produit, lors de laquelle

• un dispositif de mesure effectue une mesure pour déterminer une première information, la première information dépendant d'une propriété du premier produit à un point de mesure sur la surface du premier produit au moment de la mesure,
• la première information étant générée à partir du résultat de la mesure,
• l'unité d'évaluation affectant la première information à une maille d'un premier réseau comprenant au moins deux mailles, une maille du premier réseau étant toujours affectée à une zone de surface du premier produit et l'unité d'évaluation affectant la première information à la maille du premier réseau dont la zone de surface comprend le point de mesure,
• l'unité d'évaluation enregistre dans une base de données la première information et / ou une information secondaire dépendante de la première information et une information sur la position qui reproduit au sein du premier réseau la position de la maille du premier réseau auquel la première information a été affectée et une information sur le produit qui identifie le premier produit,
• l'unité d'évaluation affectant la première information à une maille d'un deuxième réseau comprenant un certain nombre de mailles, le nombre de mailles du deuxième réseau étant supérieur au nombre de mailles du premier réseau et une maille du deuxième réseau étant toujours affectée à une zone de surface du premier produit, qui est inférieure à la zone de surface à laquelle est affectée une maille du premier réseau, et l'unité d'évaluation affectant la première information à la maille du deuxième réseau dont la zone de surface comprend le point de mesure,
• l'unité d'évaluation enregistre dans la base de données la première information et / ou une première ou autre information secondaire dépendante de l'information et une information sur la position qui reproduit au sein du deuxième réseau la position de la maille du deuxième réseau auquel la première information a été affectée et une information sur le produit qui identifie le premier produit,
et
• un dispositif de mesure effectuant une mesure pour déterminer une deuxième information, la deuxième information dépendant d'une propriété du deuxième produit à un point de mesure sur la surface du deuxième produit au moment de la mesure,

• la deuxième information étant générée à partir du résultat de la mesure,

• l'unité d'évaluation affectant la deuxième information à une maille d'un troisième réseau comprenant au moins deux mailles, une maille du troisième réseau étant toujours affectée à une zone de surface du deuxième produit et l'unité d'évaluation affectant la deuxième information à la maille du troisième réseau dont la zone de surface comprend le point de mesure,

• l'unité d'évaluation enregistre dans une base de données la deuxième information et / ou une deuxième information secondaire dépendante de la deuxième information et une information de position qui reproduit au sein du troisième réseau la position de la maille du troisième réseau auquel la deuxième information a été affectée et une information sur le produit qui identifie le deuxième produit,

• l'unité d'évaluation affectant la deuxième information à une maille d'un quatrième réseau comprenant un certain nombre de mailles, le nombre de mailles du quatrième réseau étant supérieur au nombre de mailles du troisième réseau et une maille du quatrième réseau étant toujours affectée à une zone de surface du deuxième produit, qui est inférieure à la zone de surface à laquelle est affectée une maille du troisième réseau, et l'unité d'évaluation affectant la deuxième information à la maille du quatrième réseau dont la zone de surface comprend le point de mesure,

• l'unité d'évaluation enregistre dans la base de données la deuxième information et / ou une deuxième ou autre deuxième information secondaire dépendante de la deuxième information et une information sur la position qui reproduit au sein du quatrième réseau la position de la maille du quatrième réseau auquel la deuxième information a été affectée et une information sur le produit qui identifie le deuxième produit.

6. Procédé selon la revendication 5, **caractérisé en ce que** les mailles du premier et du troisième réseaux ont la même forme et la même surface de section transversale et que les mailles du deuxième et du quatrième réseaux ont la même forme et la même surface de section transversale.

7. Procédé selon la revendication 6, **caractérisé en ce que** la surface de section transversale des mailles du deuxième et du quatrième réseaux est inférieure à la première surface de section transversale des mailles du premier et du troisième réseaux.

8. Procédé selon la revendication 6 ou 7, **caractérisé en ce que** le nombre de mailles du deuxième réseau égale au nombre de mailles du quatrième réseau et / ou le nombre de surfaces du premier réseau égale au nombre de mailles du troisième réseau.

9. Procédé selon l'une quelconque des revendications 1 à 8, **caractérisé en ce que** lors d'une comparaison des mesures effectuées sur plus d'un produit, une même quantité de base de mesures en forme de bande est prise en compte pour toutes les mailles de réseau auxquelles une information est affectée.

Stufe 0 | Stufe 1 | Stufe 2 | Stufe 3 | Stufe 4 | Stufe 5 | Stufe 6 | Stufe 7 | Stufe 8

Fig. 1

**Fig. 2**

**IN DER BESCHREIBUNG AUFGEFÜHRTE DOKUMENTE**

**In der Beschreibung aufgeführte Patentdokumente**

- WO 0164138 A2